Europäisches Patentamt

European Patent Office

Office européen des brevets

(11) Publication number: **0 096 581**
**B1**

(12) **EUROPEAN PATENT SPECIFICATION**

(45) Date of publication of patent specification: **03.09.86**

(51) Int. Cl.⁴: **B 32 B 27/08**

(21) Application number: **83303280.8**

(22) Date of filing: **07.06.83**

(54) Laminated materials.

(30) Priority: **07.06.82 JP 96105/82**
**02.02.83 JP 14676/83**

(43) Date of publication of application:
**21.12.83 Bulletin 83/51**

(45) Publication of the grant of the patent:
**03.09.86 Bulletin 86/36**

(84) Designated Contracting States:
**BE DE FR GB NL**

(56) References cited:
**DE-A-2 719 113**
**FR-A-2 228 610**
**GB-A-1 351 073**

(73) Proprietor: **IDEMITSU PETROCHEMICAL COMPANY LIMITED**
**No. 1-1, 3-chome, Marunouchi Chiyoda-ku Tokyo (JP)**

(72) Inventor: **Misasa, Mitsugu**
**No. 9, 2-chome Kiyomidai-minami Kisarazu-shi Chiba-ken (JP)**
Inventor: **Hirayama, Ryoichi**
**No. 13-11, 1-chome Kogane-kiyoshigaoka Matsudo-shi Chiba-ken (JP)**

(74) Representative: **SERJEANTS**
**25, The Crescent King Street Leicester, LE1 6RX (GB)**

Courier Press, Leamington Spa, England.

## Description

The invention relates to laminated materials which are useful as wrapping materials or packaging materials for foodstuffs.

Aluminium and multi-layer plastics sheets have heretofore been used as food packaging materials; they are moulded by techniques such as stretch forming and thermoforming to produce food packaging containers. However, containers made of aluminium have disadvantages in that they are readily subject to breakage or deformation during filling or transportation; in particular, such deformation leads to a serious reduction in product value since the deformed containers cannot be restored. Multi-layer plastics sheets include those sheets made of polyolefins and polystyrenes. In addition, to increase the hygienic or decorative effect, those materials with an aluminium vacuum deposited layer laminated on the surface thereof have been proposed. Although these laminated materials are sufficiently applicable for use as packaging materials, they suffer from disadvantages in that in producing various containers the surface becomes uneven and is readily scratched, and there cannot be obtained the decorative effect of the lustre of aluminium. Furthermore, they are inferior in respect of gas barrier properties, light-shielding properties, heat resistance, and so forth. Another type of laminated material which has been proposed is produced by laminating a multilayer consisting of a vacuum deposited metallic layer as an inner layer and a thermoplastic resin sheet as an outer layer on a soft type resin such as low density polyethylene by an extrusion lamination process. These materials, when produced in combination with those sheets having high rigidity, suffer from disadvantages in that when they are treated under high temperature sterilizing conditions, the vacuum deposited metallic layer is scattered, and they become unsuitable for practical use. Thus, they are limited in their utilization.

There is described, in DE—A—2719113, a laminated material for packaging. Amongst the embodiments described is one in which a gaseous barrier layer of plastics material (polyamide, polyester, polypropylene or cellulose) is sandwiched between two layers of thermoplastics material, each of which may be of polyolefin and one of which has an aluminium coating on the side facing the other. Additional barrier layers may be incorporated. In FR—A—2228610 a gaseous barrier layer composed of a hydrolysed olefin:vinyl ester copolymer is disclosed.

The invention provides a laminated material comprising a first outer layer composed mainly of polyolefin, a gas barrier resin layer composed mainly of a polyamide resin, a polyester resin or a saponified product of an ethylene-vinyl acetate copolymer, an intermediate layer between the first outer layer and the gas barrier layer, and a second outer layer having a base composed mainly of a transparent thermoplastic resin and a layer of a vacuum deposited metal on the inner surface of the base characterised in that the second outer layer is bonded by a dry lamination adhesive to a coextrusion laminate of the other layers and in that the intermediate layer is composed of polyolefin modified with an unsaturated carboxylic acid or a derivative of an unsaturated carboxylic acid.

Polyolefins which can be used in the preparation of the first outer layer include polypropylene, copolymers of propylene and other monomers (e.g., α-olefin), high density polyethylene, medium density polyethylene, and low density polyethylene. Polypropyene and high density polyethylene are preferred.

Between the first outer layer and the gas barrier layer is sandwiched an intermediate layer of polyolefin modified with an unsaturated carboxylic acid or a derivative of an unsaturated carboxylic acid. Polyolefins which may be used in the preparation of such modified polypropylenes include propylene homopolymer, block copolymers or random copolymers or propylene and other comonomers (e.g. ethylene), ethylene homopolymer, and copolymers of ethylene and other α-olefins. Unsaturated carboxylic acids which can be used include acrylic acid, methacrylic acid, maleic acid, fumaric acid, itaconic acid, crotonic acid, citraconic acid, sorbic acid, mesaconic acid and angelic acid. Their derivatives include acid anhydrides, esters, amides, imides and metal salts. Specific examples of such unsaturated carboxylic acid derivatives include maleic anhydride, itaconic anhydride, methyl acrylate, acrylamide maleimide, and sodium acrylate. Modification of polyolefin with unsaturated carboxylic acid or its derivative may be performed by any suitable procedure. For example, the polyolefin and maleic anhydrdide may be heated in combination with a radical polymerization initiator in the presence or absence of a solvent to obtain the desired modified polyolefin. In this case, vinyl monomers such as styrene, or rubbers such as liquid rubber and thermoplastic rubber may be added to the reaction system. The unsaturated carboxylic acid or its derivative content of the modified polypropylene is usually from 0.001 to 15% by weight and preferably from 0.005 to 10% by weight. The term "modified polyolefin" as used herein also includes a mixture of modified polyolefin and unmodified polypropylene.

Referring now to the gas barrier resin layer, there is no limitation on the composition of the saponified product of the ethylene-vinyl acetate copolymer.

However, for the best gas barrier and oil resistance properties, it is preferred to use products resulting from the saponification of ethylene:vinyl acetate copolymers having an ethylene content of from 25 to 50 mole%, the degree of saponification being at least 93% and preferably at least 96%. Polyamide resins are linear synthetic polymers containing —CONH— linkages which are obtained by condensation of diamines and dicarboxylic acids, or self condensation of amino acids, or ring-open polymerisation of lactams. Typical examples of the polyamide resins that can be used include 6-nylon (polycapramide), 6,6-nylon (polyhexamethylene adipamide), 6,10-nylon (polyhexamethylene sebacamide), 11-nylon (polyundecamide), and 12-nylon. Polyester resins are prepared by condensation of saturated dicarboxylic acids and glycols. Examples are polyethylene terephthalate produced from ethylene glycol and terephthalic acid; polyethylene terephthalate copolymers containing a saturated dibasic acid, such as phthalic acid, isophthalic acid, sebacic acid, adipic acid, azelaic acid, glutaric acid, succinic acid, and oxalic acid, as a copolymer component; polyethylene terephthalate copolymers containing a diol component, such as 1,4-dihydroxymethylcyclohexane, diethylene glycol, propylene glycol, or the like as a copolymer component; and their mixture.

Between gas barrier resin layer and the second outer layer may be interposed, if desired, a layer of a synthetic resin. Synthetic resins which may be used for this purpose include polyethylene and polypropylene.

The second outer layer has a base composed mainly of a transparent thermoplastic resin. Preferably it is a non-stretched film. There is no limitation on the thermoplastics resin as used herein. For example, polyamides, polymethyl methacrylates, polyethylenes, polypropylenes, polystyrenes, polycarbonates, polyvinyl chlorides, polyvinylidene chlorides, polyesters, and saponified products of ethylene-vinyl acetate copolymers are suitable. When it is desired for the laminated material to have good lustre, polyamide, polymethyl methacrylate, etc. are selected. On the other hand, when it is desired to obtain a matted surface, polypropylene, etc. are selected.

On the inner surface of the base of the second outer layer is a vacuum deposited metal. Usually aluminium is used. However, zinc, chromium, nickel, gold, silver or other metals may be used depending on the intended purpose of the laminated material.

Between the base of the second outer layer and the vacuum deposited metal may, if desired, be a coloured coating layer. This coloured coating layer may be formed by coating the thermoplastic resin base with a coating material having the desired colour.

The thickness of the layers of the laminated material of the invention are not critical. A suitable ratio would be first outer layer: intermediate modified polyolefin layer: gas barrier resin layer: vacuum deposited metal: base of second outer layer=100—200: 5—30: 10—100: 0.03—0.08: 20—100.

In producing the laminated material of the invention, there is employed a process in which a laminated material of the first outer layer, the intermediate layer, the gas barrier layer and, if included, the synthetic resin layer is first prepared by extrusion lamination. The second outer layer is prepared by applying a vacuum deposition of metal, e.g. aluminium, onto a thin film of the base material, which will lead to a great increase in productivity.

A dry lamination adhesive is coated between the vacuum deposited metal and the extrusion laminate by means of a dry laminator and dried and, thereafter, the two layers are laminated on each other to form the desired laminated material.

Dry lamination adhesives which can be used include polyester or polyether-based polyurethane resins, and acrylic resins, such as acrylic acid alkyl ester and methacrylic acid alkyl ester. The amount of the adhesive coated is from 2 to 10 $g/m^2$ and preferably from 1.5 to 8 $g/m^2$. Suiable solvents include aromatic hydrocarbons, esters and halogen-containing hydrocarbons.

The laminated material of the invention may be treated at high temperatures for the purpose of, e.g. sterilization. It can be moulded into containers and the like by techniques such as moulding under vacuum, and moulding under vacuum and pressure.

The laminated material of the invention possesses the decorative effect due to metallic lustre; by using a coloured coating layer in combination, there can be obtained a colour decorative effect. Since the laminated material of the invention is superior in gas barrier properties, light-shielding properties, and moisture resistance, when it is used as a container, for example, the contents can be stored therein for a long period of time. Furthermore, since the container is less subject to breakdown or deformation and even if it is deformed it can be easily restored, therefore, a reduction in product value does not occur. By suitably selecting the synthetic resin to be used in the laminated material, it becomes possible to apply a retort processing onto the resulting container. With laminated materials in which the above-described adhesives are placed between the vacuum deposited metallic layer and the gas barrier resin layer, heat resistance is superior and it is possible to apply a high temperature sterilizing treatment. In this case, the vacuum deposited metal is stable and is not scattered. Accordingly, the laminated material of the invention is useful as a packaging material and particularly as a material for use in the production of food packaging containers.

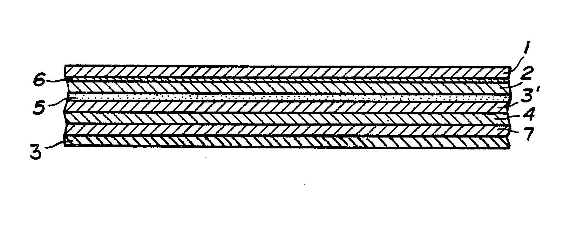

The preferred laminated material of the invention is illustrated in the drawing in which the reference numerals are as follows:

1... Transparent thermoplastic resin (base of second outer layer)
2... Vacuum deposited metal
3... Polyolefin layer (first outer layer A)
3'... Synethetic resin layer (optional)
4... Gas barrier resin layer
5... Adhesive for dry lamination
6... Coloured coating layer (optional)

7... Modified polyolefin layer (intermediate layer)

The invention is further illustrated by the following examples.

Example 1

A coextrusion laminated sheet comprising a polypropylene first outer layer, an intermediate layer of polypropylene modified with maleic anhydride and a gas barrier resin layer of saponified product of ethylene-vinyl acetate copolymer (ethylene content: 30 mole%) (thickness: 750 μm: 20 μm: 30 μm) was produced. A 30-μm thick nonstretched polypropylene film with a vacuum deposited aluminium layer provided on one surface thereof was laminated on the foregoing coextrusion laminated sheet through an epoxy resin-based adhesive with the vacuum deposited aluminium layer in contact with the ethylene:vinyl acetate copolymer saponified product layer. The laminated material obtained had a metallic lustre.

Example 2

A laminated material was produced as described in Example 1 except that there was used a film produced by coating a nonstretched polypropylene film with a gold coating agent and vacuum-depositing aluminium on the coating layer. A container produced by vacuum thermal moulding of the above-produced laminated material did not have a surface lustre, but had a metallic feeling.

Example 3

A laminated material was produced as described in Example 1 except that 6-nylon (relative viscosity: 4.4) was used in place of the ethylene-vinyl acetate copolymer saponified product.

Example 4

A laminated material was produced as described in Example 1 except that polyethylene terphthalate (relative viscosity: 1.1) was used in place of the ethylene-vinyl acetate copolymer saponified product.

Example 5

A laminated material was produced as described in Example 1 except that a nonstretched 6-nylon film was used in place of the nonstretched polypropylene film. A container produced by vacuum thermal moulding of the laminated material had surface lustre and a high quality feeling.

Example 6

A 30 μm thick nonstretched polypropylene film was coated with a gold coating agent and, thereafter, aluminium was vacuum deposited on the coating layer. On the thus-treated polypropylene film was laminated, using an epoxy resin based adhesive, a coextrusion laminated sheet comprising a polypropylene first outer layer, an intermediate layer of polypropylene modified with maleic anhydride, a gas barrier resin layer of saponified product of an ethylene-vinyl acetate copolymer, a further layer of polypropylene modified with maleic anhydride and a polypropylene layer (thickness: 350 μm: 20 μm: 30 μm: 20 μm: 350 μm) with that the vacuum deposited aluminium layer in contact with the polypropylene layer. A container produced by vacuum thermal moulding of the resultant laminated material did not have surface lustre, but had a metallic feeling.

Example 7

Aluminium was vacuum deposited on one side of a 25 μm thick nonstretched polypropylene film. Separately, a coextrusion laminated sheet comprising a polypropylene first outer layer, an intermediate layer of polypropylene modified with maleic anhydride and a gas barrier resin layer of saponified product of an ethylene-vinyl acetate copolymer (ethylene content: 30 mole%; thickness: 750 μm: 20 μm: 30 μm) was produced.

A polyester-based polyurethane adhesive (resin content: 25% by weight; viscosity: 0.05 PaS at 25°C; solvent: ethyl acetate) was coated on the polypropylene film in an amount (calculated as resin) of 5 g/m² by a dry laminator and dried. The adhesive coated film was laminated on the coextrusion laminated sheet so that the vacuum deposited aluminium layer was in contact with the layer of the saponified product of the ethylene-vinyl acetate copolymer, which was then allowed to stand at 35°C for 10 hours to obtain a laminated material.

The 180° peeling strength of the product at the adhesive surface was 8.34 N/15 mm, and after application of retort sterilization at 120°C for 30 minutes, there were observed no changes in form, adhesive force, or in the vacuum deposited coating film.

Example 8

A laminated material was produced as described in Example 7 except that a sheet comprising a polypropylene layer, a layer of polypropylene modified with maleic anhydride, a layer of a saponified product of an ethylene-vinyl acetate copolymer (ethylene content: 30 mole%), a layer of polypropylene modified with maleic anhydride and a polypropylene layer (layer thickness: 350 μm: 20 μm: 30 μm: 20 μm: 350 μm) was used as the coextrusion laminated sheet. The 180° peeling strength of the product at the adhesive surface was 8.04 N/15 mm, and after application of retort sterilization at 120°C for 30 minutes, there were observed no changes in form, adhesive force, or in the vacuum deposited layer.

Example 9

A laminated material was produced as described in Example 8 except that a polyether-based polyurethane adhesive (resin content: 25% by weight; viscosity: 0.04 PaS at 25°C; solvent: ethyl acetate) was used in an amount (calculated as resin) of 3 g/m² as the adhesive. The 180° peeling strength of the product at the adhesive surface was 6.67 N/15 mm and after application of retort sterilization at 120°C for 30 minutes, there were observed no changes in form, adhesive force, or in the vacuum deposited layer.

Example 10

A laminated material was produced as described in Example 7 except that there was used a 25 µm thick nonstretched polypropylene film, on one surface of which had been provided a gold coloured coating and, thereafter, vacuum deposited aluminium. This laminated material had golden metallic lustre.

**Claims**

1. A laminated material comprising a first outer layer (3) composed mainly of polyolefin, a gas barrier resin layer (4) composed mainly of a polyamide resin, a polyester resin or a saponified product of an ethylene-vinyl acetate copolymer, an intermediate layer (7) between the first outer layer and the gas barrier layer, and a second outer layer having a base (1) composed mainly of a transparent thermoplastic resin and a layer of a vacuum deposited metal (2) on the inner surface of the base characterised in that the second outer layer is bonded by a dry lamination adhesive (5) to a coextrusion laminate of the other layers and in that the intermediate layer is composed of polyolefin modified with an unsaturated carboxylic acid or a derivative of an unsaturated carboxylic acid.

2. A laminated material according to claim 1 characterised in that the first outer layer (3) is composed of polypropylene, a copolymer of propylene and another α-olefin, a high density polyethylene, a medium density polyethylene or a low density polyethylene.

3. A laminated material according to claim 1 or claim 2 characterised in that the gas barrier resin layer (4) is composed of a product resulting from the saponification of an ethylene-vinyl acetate copolymer having an ethylene content of from 25 to 50 mole percent to the extent that the degree of saponification is at least 93 percent.

4. A laminated material according to claim 1 or claim 2 characterised in that the gas barrier resin layer (4) is composed of 6-nylon, 6,6-nylon, 6,10-nylon, 11-nylon, 12-nylon, polyethylene terephthalate, a polyethylene terephthalate copolymer containing a saturated dibasic acid or a polyethylene terephthalate copolymer containing a diol component.

5. A laminated material according to any preceding claim characterised in that the vacuum deposited metal (2) is aluminium.

6. A laminated material according to any preceding claim characterized in that the base (1) of the second outer layer is composed of polyamide, polymethyl methacrylate, polyethylene, polypropylene, polystyrene, polycarbonate, polyvinyl chloride, polyvinylidene chloride, polyester or a saponified product of an ethylene-vinyl acetate copolymer.

7. A laminated material according to any preceding claim characterized in that a coloured coating layer (6) is formed between the base (1) of the second outer layer and the vacuum deposited metal (2).

8. A laminated material according to any preceding claim characterised in that the intermediate layer (7) is composed of polypropylene modified with maleic anhydride.

9. A laminated material according to any preceding claim characterised in that the dry lamination adhesive (5) is an epoxy resin, a polyester-based polyurethane adhesive or a polyether-based polyurethane adhesive.

10. A laminated material according to any preceding claim characterised in that between the second outer layer and gas barrier resin layer (4) is a layer (3') of a synthetic resin.

**Patentansprüche**

1. Geschichtetes Material, enthaltend eine hauptsächlich aus Polyolefin zusammengesetzte erste äußere Schicht (3), eine hauptsächlich aus einem Polyamidharz, einem Polyesterharz oder einem verseiften Produkt eines Ethylen-Vinyl-acetat-Copolymeren zusammengesetzte Gas-barrierenharzschicht (4), eine Zwischenschicht (7) zwischen der ersten äußeren Schicht und der Gasbärrierenschicht und eine zweite äußere Schicht mit einer Basis (1), welche hauptsächlich aus einem transparenten thermoplastischen Harz und einer Schicht eines im Vakuum niedergeschlagenen Metalls (2) auf der inneren Oberfläche der Basis zusammengesetzt ist, dadurch gekennzeichnet, daß die zweite äußere Schicht durch einen Trockenlaminierklebstoff (5) an ein coextrudiertes Laminat der anderen Shichten Gebunden ist, und dadurch, daß die Zwischenschicht aus einem mit einer ungesättigten Carbonsäure oder einem Derivat einer ungesättigten Carbonsäure modifizierten Polyolefin zusammengesetzt ist.

2. Geschichtetes Material nach Anspruch 1, dadurch gekennzeichnet, daß die erste äußere Schicht (3) aus Polypropylen, einem Copolymeren aus Propylen und ienem anderen α-Olefin, einem Polyethylen hoher Dichte, einem Polyethylen mittlerer Dichte oder einem Polyethylen niederer Dichte zusammengesetzt ist.

3. Geschichtetes Material nach Anspruch 1 oder Anspruch 2, dadurch gekennzeichnet, daß die Gasbarrierenharzschicht (4) aus einem Produkt zusammengesetzt ist, welches aus der Verseifung eines Ethylen-Vinylacetat-Copolymeren mit einem Ethylengehalt von 25 bis 50 Mol-% bis zu einem Ausmaß, daß der Grad der Verseifung wenigstens 93% beträgt, berührt.

4. Geschichtetes Material nach Anspruch 1 oder Anspruch 2, dadurch gekennzeichnet, daß die Gasbarrierenharzschicht (4) aus Nylon-6, Nylon-6,6, Nylon-6,10, Nylon-11, Nylon-12, Polyethylenterephthalat, einem Polyethylen-Terephthalat-Copolymeren, welches eine gesättigte, dibasische Säure enthält, oder einem Polyethylen-Terephthalat-Copolymeren, welches eine Diolkomponente enthält, zusammenengesetzt ist.

5. Geschichtetes Material nach einem vorstehenden Anspruch, dadurch gekennzeichnet, daß das im Vakuum niedergeschlagene Metall (2) Aluminium ist.

6. Geschichtetes Material nach einem vorstehenden Anspruch, dadurch gekennzeichnet, daß die Basis (1) der zweiten äußeren Schicht aus Polyamid, Polymethylmethacrylat, Polyethylen, Polypropylen, Polystyrol, Polycarbonat, Polyvinylchlorid, Polyvinylidenchlorid, Polyester oder einem verseiften Produkt eines Ethylen-Vinylacetat-Copolymeren zusammengesetzt ist.

7. Geschichtetes Material nach einem vorstehenden Anspruch, dadurch gekennzeichnet, daß zwischen der Basis (1) der zweiten äußeren Schicht und dem in Vakuum niedergeschlagenen Metall (2) eine gefärbte Überzugsschicht (6) gebildet wird.

8. Geschichtetes Material nach einen vorstehenden Anspruch, dadurch gekennzeichnet, daß die Zwischenschicht (7) aus einem mit Maleinsäureanhydrid modifizierten Polypropylen zusammengesetzt ist.

9. Geschichtetes Material nach einem vorstehenden Anspruch, dadurch gekennzeichnet, daß der Trockenlaminierklebstoff (5) ein Epoxyharz, ein Polyurethanklebstoff auf Polysterbasis oder ein Polyurethanklebstoff auf Polyetherbasis ist.

10. Geschichtetes Material nach einem vorstehenden Anspruch, dadurch gekennzeichnet, daß zwischen der zweiten äußeren Schicht und der Gasbarrierenharzschicht (4) eine Schicht (3') eines synthetischen Harzes vorhanden ist.

**Revendications**

1. Matériau stratifié comprenant une première couche externe (3) principalement constituée de polyoléfine, une couche de barrière aux gaz (4) principalement constituée d'une résine de polyamide, d'une résine de polyester ou d'un produit saponifié d'un copolymère éthylèneacétate de vinyle, une couche intermédiaire (7) entre la première couche externe et la couche barrière aux gaz et une seconde couche externe ayant une base (1) constituée principalement d'une résine thermoplastique ou d'une couche d'un métal déposé sous vide (2) sur la face interne de la base, caractérisé en ce que la seconde couche externe est liée par un adhésif de stratification à sec (5) à un stratifié obtenu par coextrusion des autres couches et en ce que la couche intermédiaire est composée d'une polyoléfine modifiée avec un acide carboxylique insaturé ou un dérivé d'un acide carboxylique insaturé.

2. Matériau stratifié suivant la revendication 1, caractérisé en ce que la première couche externe (3) est composée de polypropylène, d'un copolymère de polypropylène et d'une autre alpha-oléfine, d'un polyéthylène haute densité, d'un polyéthylène moyenne densité ou d'un polyéthylène basse densité.

3. Matériau stratifié suivant les revendications 1 ou 2, caractérisé en ce que la couche de résine barrière aux gaz (4) est composée d'un produit résultant de la saponification d'un copolymère éthylène-acétate de vinyle ayant une teneur en éthylène de 25 à 50 moles pour cent et telle que le degré de saponification soit d'au moins 93%.

4. Matériau stratifié suivant les revendications 1 ou 2, caractérisé en ce que la couche de résine barrière aux gaz (4) est composée de Nylon 6, de nylon 6,6, de nylon 6,10, de nylon 11, de nylon 12, de polyéthylène téréphtalate, d'un copolymère du polyéthylène téréphtalate contenant un diacide saturé ou d'un copolymère du polyéthylène téréphtalate contenant un constituant diol.

5. Matériau stratifié suivant l'une quelconque des revendications précédentes, caractérisé en ce que le métal déposé sous vide (2) est de l'aluminium.

6. Matériau stratifié suivant l'une quelconque des revendications précédentes, caractérisé en ce que la base (1) de la seconde couche externe est composée de polyamide, de polyméthacrylate de méthyle, de polyéthylène, de polypropylène, de polystyrène, de polycarbonate de polychlorure de vinyle, de polychlorure de vinylidène, de polyester ou d'un produit saponifié d'un copolymère éthylène-acétate de vinyle.

7. Matériau stratifié suivant l'une quelconque des revendications précédentes, caractérisé en ce qu'une couche de revêtement colorée (6) est formée entre la base (1) de la seconde couche externe et le métal déposé sous vide (2).

8. Matériau stratifié suivant l'une quelconque des revendications précédentes, caractérisé en ce que la couche intermédiaire (7) est composée de polypropylène modifie par de l'anhydride maléique.

9. Matériau stratifié suivant l'une quelconque des revendications précédentes, caractérisé en ce que l'adhésif de stratification à sec (5) est une résine époxyde, un adhésif de polyuréthanne à base de polyester ou un adhésif de polyuréthanne à base de polyéther.

10. Matériau stratifié suivant l'une quelconque des revendications précédentes, caractérisé en ce que la seconde couche externe et la couche de résine barrière aux gaz (4) est une couche (3') d'une résine synthétique.

0 096 581